# EUROPEAN PATENT APPLICATION

(11) **EP 3 521 054 A1**
(43) Date of publication of application: **07.08.2019**
(21) Application number: 19166140.4
(22) Date of filing: 26.01.2007
(51) Int. Cl.: B43K 29/00, B44F 1/00, C09K 9/00, B43K 7/02, B43K 7/10, B43K 8/04, B43K 8/06, B43K 23/12, B43K 29/02, B43L 19/00, B43K 1/08

(54) **FRICTION BODY, WRITING INSTRUMENT AND WRITING INSTRUMENT SET**

(30) Priority: 27.01.2006 JP 2006018700; 30.11.2006 JP 2006323425
(62) Divisional of application: 07001743.9
(71) Applicant: THE PILOT INK CO., LTD., Nagoya-shi, Aichi 466-0013 (JP); Kabushiki Kaisha Pilot Corporation (also trading as Pilot Corporation), Tokyo 104-8304 (JP)
(72) Inventor: Senga, Kuniyuki, Aichi 466-0013 (JP); Ito, Yoshihiro, Aichi 466-0013 (JP)
(74) Representative: Hoffmann Eitle

(57) **Abstract**

A friction body for allowing an image having reversible thermochromism to change color from a first state to a second state by frictional heat, wherein the above-mentioned frictional body has a contact area ranging from 0.5 to 15 mm² when pressed onto a glass plate with a load of 1000 g, a writing instrument containing a reversible thermochromic ink, which is provided with the above-mentioned friction body, and a writing instrument set having the writing instrument containing a reversible thermochromic ink and the above-mentioned friction body.

## Description

### BACKGROUND OF THE INVENTION

### 1. Field of the Invention

The present invention relates to a friction body a writing instrument, and writing instrument set. More particularly, the invention relates to a friction body for allowing an image or handwriting formed by reversible thermochromic ink to change color from a first state to a second state by frictional heat, and a writing instrument and writing instrument set provided with the friction body.

### 2. Description of Related Art

There has hitherto been proposed a thermochromic set provided with a friction body for allowing a reversible thermochromic layer formed on a support (such as paper) to change color by frictional heat due to manual friction (for example, see Japanese Patent Unexamined Publication JP-A-7-241388).

When the friction body used in the above-mentioned proposal is rubbed for generating frictional heat, the reversible thermochromic layer is exfoliated from the support to thereby impair changes in color. It is therefore necessary to provide an overcoat layer on the reversible thermochromic layer, thereby preventing the exfoliation.

Further, in an exemplified resin used in a rubbing portion of the friction body described in the JP-A-7-241388 described above, the resin itself is shaved by rubbing. Accordingly, shavings are generated to bring pollution to the environment in some cases. Furthermore, the generation efficiency of frictional heat is low, so that the number of rubbing increases, and a contact portion with the thermochromic layer becomes large, so that strong pressing force is required in rubbing in some cases.

Moreover, in order to prevent a rubbed portion of a reversible thermochromic image from being exfoliated, the overcoat layer is provided on the reversible thermochromic layer of the JP-A-7-241388 described above. Accordingly, an existing reversible thermochromic image can only be allowed to change color, but a reversible thermochromic image freely formed by a user can not be allowed to change color.

Consequently, there has been proposed a silicone rubber as a friction body useful for changing color without necessitating a protective member such as the overcoat layer and without exfoliating an image or handwriting formed with a reversible thermochromic ink (for example, see Japanese Patent Unexamined Publication JP-A-2004-148744).

The above-mentioned silicone rubber can change color without exfoliating the image or handwriting formed with the reversible thermochromic ink, and the generation efficiency of frictional heat is high. Accordingly, it can exhibit an excellent effect as the friction body.

However, the contact portion (area) with the thermochromic image becomes large in rubbing depending on the shape of the friction body, so that strong pressing force has been required in rubbing, the number of rubbing has increased, or it has been difficult to allow only handwriting of a desired portion or a minute area portion to change color selectively and easily by rubbing.

### SUMMARY OF THE INVENTION

An object of the invention is to provide a friction body which can allow to change color from a first state to a second state without exfoliating an image or handwriting formed with a reversible thermochromic ink by rubbing and can allow only a minute area portion to change color selectively and easily by rubbing without requiring strong pressing force in rubbing and without increasing the number of rubbing.

Further, another object of the invention is to provide a writing instrument provided with a friction body which can allow an image freely formed with a reversible thermochromic ink to change color, and a writing instrument set comprising the friction body and a writing instrument.

According to a first aspect of the invention, there is provided a friction body for allowing an image having reversible thermochromism to change color from a first state to a second state by frictional heat,
wherein the frictional body has a contact area ranging from 0.5 to 15 mm² when pressed onto a glass plate with a load of 1000 g.

According to a second aspect of the invention, as set forth in the first aspect of the invention, it is preferable that the friction body has a contact area ranging from 0.5 to 12 mm² when pressed onto a glass plate with a load of 500 g.

According to a third aspect of the invention, as set forth in the second aspect of the invention, it is preferable that the friction body is an elastic body which satisfies a relation of B<A≤4B,
wherein A is a contact area at the time when pressed onto the glass plate with the load of 1000 g and
B is a contact area at the time when pressed onto the glass plate with the load of 500 g.

According to a fourth aspect of the invention, there is provided a friction body for allowing an image having reversible thermochromism to change color from a first state to a second state by frictional heat,
wherein the frictional body has a contact area of 3.2 mm² or less when pressed onto a glass plate with a load of 500 g, and a contact area of 5.0 mm² or less when pressed onto a glass plate with a load of 1000 g.

According to a fifth aspect of the invention, as set forth in the fourth aspect of the invention, it is preferable that the friction body has a Shore hardness based on JIS K6253A of 40 degrees or more.

According to a sixth aspect of the invention, as set forth in the first aspect of the invention, it is preferable that the friction body comprises a styrene-butadiene-styrene copolymer or a styrene-ethylene·butylene-styrene copolymer.

According to a seventh aspect of the invention, as set forth in the first aspect of the invention, it is preferable that the friction body comprises a coloring agent

According to an eighth aspect of the invention, there is provided a writing instrument comprising:
a reversible thermo-chromic ink therein; and
the friction body according to the first aspect of the invention for allowing handwriting formed by the writing instrument to change color from the first state to the second state by frictional heat.

According to a ninth aspect of the invention, as set forth in the eighth aspect of the invention, it is preferable that a writing instrument member constituting the writing instrument or a main body of the writing instrument and the friction body are integrally formed by coinjection molding.

According to a tenth aspect of the invention, as set forth in the eighth aspect of the invention, it is preferable that the reversible thermochromic ink is of any one or of an arbitrary combination of:
a heat discoloring type in which color disappears from a color-developed state by heating;
a color memory retention type in which a color-developed state or a discolored state is interchangeably memorized and retained in a specific temperature region; and
a heat color-developing type in which color is developed from a discolored state by heating and it returns to the discolored state by cooling from the color-developed state.

According to an eleventh aspect of the invention, as set forth in the eighth aspect of the invention, it is preferable that the writing instrument has a handwriting width ranging from 0.1 to 5 mm.

According to a twelfth aspect of the invention, as set forth in the eighth aspect of the invention, it is preferable that the reversible thermochromic ink comprises at least a micro-encapsulated pigment having a color change point on the high-temperature side ranging from 25°C to 95°C.

According to a thirteenth aspect of the invention, there is provided a writing instrument set comprising:
a writing instrument containing at least reversible thermochromic ink; and
the friction body according to the first aspect of the invention for allowing handwriting formed by the writing instrument to change color from the first state to the second state by frictional heat.

According to a fourteenth aspect of the invention, as set forth in the thirteenth aspect of the invention, it is preferable that the writing instrument set has a handwriting width ranging from 0.1 to 5 mm.

According to the first aspect of the invention, there can be obtained the friction body which can allow only a desired minute area portion to change color selectively and easily by rubbing without requiring strong pressing force in rubbing and without increasing the number of rubbing.

According to the second aspect of the invention, only a desired minute area portion can be allowed to change color selectively and easily by rubbing.

According to the third aspect of the invention, a contact portion is enlarged to a size suitable for rubbing in pressing, so that rubbing can be performed by light force without directionality. Accordingly, even a user who is weak in force such as an infant can allow a desired portion to change color selectively and easily by rubbing.

According to the fourth aspect of the invention, there is obtained the friction body which can allow only a desired minute area portion to change color selectively and easily by rubbing without allowing a peripheral portion thereof to change color.

According to the fifth aspect of the invention, it does not occur that the friction body is shaved in rubbing to bring pollution to the periphery of a rubbed portion, and the generation efficiency of frictional heat can be increased.

According to the sixth aspect of the invention, a thermochromic image can be allowed to change color without exfoliating it, and even on a portion once rubbed, a thermochromic image can be formed again without generating ink repellency on the rubbed portion.

According to the seventh aspect of the invention, the design freedom of the friction body is enhanced.

According to the eighth aspect of the invention, a user can freely form an image, and using the friction body provided on the writing instrument, the above-mentioned image can be easily allowed to change color.

According to the ninth aspect of the invention, the friction body can be securely attached to the writing instrument without dropping off.

According to the tenth aspect of the invention, there can be formed an image which is magical that the image reversibly changes color by heating and cooling, and it can be variously applied to and developed in learning, teaching, toy elements and the like, depending on its purpose.

According to the eleventh and fourteenth aspect of the invention, there can be formed handwriting suitable for a user to write a letter or draw an image on a minute portion, and to allow it to change color using the friction body provided in combination.

According to the twelfth aspect of the invention, the ink has high-density color developability, and is surely changed in color by rubbing.

According to the thirteenth aspect of the invention, a user can freely form an image, and using the friction body provided in combination, the above-mentioned image canbe easily allowed to change color.

### BRIEF DESCRIPTION OF THE DRAWINGS

Fig. 1 is a longitudinal cross-sectional view showing one embodiment of a writing instrument provided with a friction body of the invention;
Fig. 2 is a graph illustrating a color change behavior of a heat discoloring type reversible thermochromic ink;
Fig. 3 is a longitudinal cross-sectional view showing one embodiment of a friction body of the invention;
Fig. 4 is a longitudinal cross-sectional view showing one embodiment of a writing instrument provided with a friction body of the invention;
Fig. 5 is a longitudinal cross-sectional view showing another embodiment of a writing instrument provided with a friction body of the invention;
Fig. 6 is a longitudinal cross-sectional view showing still another embodiment of a writing instrument provided with a friction body of the invention;
Fig. 7 is a longitudinal cross-sectional view showing one embodiment of a friction body of the invention;
Fig. 8 is a longitudinal cross-sectional view showing another embodiment of a friction body of the invention; and
Fig. 9 is a longitudinal cross-sectional view showing one embodiment of a writing instrument used in a writing instrument set of the invention.

### DETAILED DESCRIPTION OF EXEMPLARY EMBODIMENTS OF THE INVENTION EMBODIMENTS

The friction body of the invention can allow a minute area portion of an image or handwriting formed with a reversible thermochromic ink or the like by a means such as printing, writing or the like to change color selectively and easily from a first state to a second state by frictional heat, and allows it to interchangeably change color to a color different from the normal state by rubbing the above-mentioned image or handwriting.

Further, the friction body of the invention can be allowed to generate heat by a manual operation without using power or the like, so that it can be produced at low cost requiring no large-scaled apparatus. Accordingly, it can be provided at a rear end portion of a barrel of the writing instrument containing the reversible thermochromic ink or at a tip end portion of a cap for the writing instrument by a means such as fitting or coinjection molding, can be used in combination with the writing instrument containing the reversible thermochromic ink, or can be used in combination with a picture book or toy provided with images printed with the reversible thermochromic ink.

In particular, when the above-mentioned writing instrument and friction body are separately provided to form a reversible thermochromic writing instrument set, or when the friction body is provided on the above-mentioned writing instrument, a free image can be formed by the above-mentioned writing instrument, the above-mentioned image can be allowed to easily change color by the friction body. This becomes therefore more useful.

The above-mentioned friction body is formed so that the contact area at the time when pressed onto a glass plate with a load of 1000 g ranges from 0.5 to 15 mm².

Thereby, the contact area at the time when the friction body is pressed onto a support (such as paper) on which the image is formed in rubbing lies within the small range. Accordingly, frictional heat can be generated without increasing the number of rubbing, and rubbing can be performed without requiring strong pressing force. It is therefore possible to allow only a desired minute area portion to change color selectively and easily by rubbing.

Further, the friction body is preferably formed so that the contact area at the time when pressed onto a glass plate with a load of 500 g ranges from 0.5 to 12 mm². In that case, there is preferably used an elastic body having a value smaller than the contact area at the time when pressed onto a glass plate with a load of 1000 g, and setting is preferably performed so that contact area A at the time when pressed onto a glass plate with a load of 1000 g and contact area B at the time when pressed onto a glass plate with a load of 500 g satisfy a relation of B<A≤4B.

This makes it possible to impart moderate flexibility to the friction body, so that when the friction body is pressed on the support on which the image is formed, the contact portion is enlarged to a size suitable for rubbing depending on pressing force, thereby being able to allow the desired portion to effectively change color by rubbing. Further, the friction body can be rubbed with the support in a closer state, so that pressing force does not happen to be dispersed, and it can move without directionality.

Further, the above-mentioned friction body is formed so that the contact area of a glass plate and the friction body becomes 3.2 mm² or less when pressed onto the glass plate with a load of 500 g, and the contact area of a glass plate and the friction body becomes 5.0 mm² or less when pressed onto the glass plate with a load of 1000 g.

This makes it possible to surely select only the minute area portion of the above-mentioned image to allow it to easily change color by rubbing.

In both the above-mentioned loads, the contact area of the friction body at the time when pressed onto the glass plate is preferably 0.5 mm² or more, considering the strength and formability of the friction body.

As the above-mentioned glass plate, there is used a float glass having such transparency that the contact portion can be visually observed from a back side thereof when the friction body is brought into contact with a surface thereof and having surface smoothness.

The shape of the above-mentioned friction body may be any as long as it satisfies the above-mentioned conditions. However, a pyramidal shape or a conical shape is preferred because a constant contact area is obtained independently of a contact angle with the handwriting and only the desired portion can be rubbed without rubbing a wide region. Further, it is preferred that a leading edge is formed in a convex curve.

Further, the hardness of the above-mentioned friction body is preferably adjusted to 40 degrees or more, and more preferably to 55 degrees or more, in Shore hardness A in JIS (Japanese Industrial Standard) K6253A.

Adjustment to 40 degrees or more generates a deformation which is not too hard and suitable for rubbing (friction), so that frictional heat can be generated without requiring strong pressing force. Further, adjustment to 55 degrees or more increases the generation efficiency of frictional heat and makes it more difficult for the friction body to be shaved. Accordingly, the thermochromic image can be allowed to easily change color by the small number of rubbing, and the friction body can be used without pollution to the periphery of the rubbed portion caused by shavings.

Furthermore, in order to impart elasticity to the friction body, it is preferred that Shore hardness A is adjusted to 100 degrees or less. Adjustment to 100 degrees or less gives moderate elastic force, so that the contact surface to the support in rubbing increases to allow the thermochromic image to easily change color by the small number of rubbing and to be smoothly rubbed.

As the above-mentioned frictionbody, there can be applied an arbitrarily shaped one comprising a relatively hard synthetic resin such as polypropylene, polyethylene, a polycarbonate, polyethylene terephthalate, a polyacetal, an acrylic resin, nylon, an acrylonitrile-styrene copolymer resin (AS resin) or an acrylonitrile-butadiene-styrene copolymer resin (ABS resin), a thermoplastic elastomer such as a styrene-based elastomer, an olefin-based elastomer, a polystyrene-polyolefin block copolymer, a urethane-based elastomer, a polyester-based elastomer, a polyamide-based elastomer, a 1,2-polybutadiene-based elastomer, a vinyl chloride-based elastomer or a fluorine-based elastomer, a blended elastomer such as a blend of polypropylene and ethylene-propylene-based rubber, a blend of butadiene and an acrylonitrile copolymer or a blend of chlorinated polyethylene and nylon, a rubber elastomer such as silicone rubber, natural rubber, synthetic rubber, foams of various resins, thermally fused or resinated fiber, wool felt or the like.

In particular, of the above-mentioned materials, the styrene-based elastomer is useful, and a styrene-butadiene-styrene (SBS) copolymer or a styrene-ethylene·butylene-styrene (SEBS) copolymer is suitably used. These copolymers have the good generation efficiency of frictional heat to allow the thermochromic image to repeatedly reversibly change color without exfoliating it, and can be smoothly rubbed because of their low resistance in rubbing. Further, even when a surface of the friction body is exfoliated therefrom and thus exfoliated surface of the friction body is adhered to the support (such as paper) at the time of rubbing, ink repellency does not occur. It is therefore possible to perform rewriting on the rubbed portion.

When a soft one is used as the material, it is preferred to take a constitution that a base material composed of a hard material is covered with it by using a means such as adhesion, sticking, fusion, fitting or coinjection molding.

Further, a coloring agent can be added to the above-mentioned friction body. One which is rich in designability is obtained by coloring the friction body. Furthermore, when the friction body is attached to the writing instrument, it is colored to an ink color of the first state or the second state, thereby being able to use as a color indication function part for informing to a user the color of the first state or a color which appears by a color change, to conform design by coloring it in conformity with a color of an exterior of the writing instrument, or conversely to show up the friction body as one different in color tone from the exterior.

As the amount of the above-mentioned coloring agent added, it is preferred that the coloring agent is contained in an amount of 0.1 to 1.0% by weight based on the total amount of the friction body. Less than 0.1% results in failure to clearly color the friction body, whereas exceeding 1.0% results in the occurrence of color transfer of the coloring agent to the periphery of the handwriting when rubbed in some cases.

As the above-mentioned coloring agent, there can be appropriately used a general-purpose dye or pigment or the like, and there is used, for example, aluminum powder or various pearl pigments, as well as an acid dye, a basic dye, a direct dye, a fluorescent dye, a fluorescent pigment, an inorganic pigment such as carbon black, ultramarine blue or titanium oxide and an organic pigment.

Further, various additives such as a filler can be added to the above-mentioned friction body as needed.

When the above-mentioned friction body is attached to the writing instrument, it can be attached by fitting one formed as a separate member to the writing instrument or by forming integrally with a main body of the writing instrument or a member of the writing instrument by coinjection molding. When fitted as the separate member, the friction body is formed in a shape of the writing instrument member such as a head crown or a tail stopper to directly constitute the writing instrument, thereby also being able to reduce the number of parts.

Further, the above-mentioned copolymers are excellent in formability, so that they can be easily provided as the friction body by coinjection molding with the main body of the writing instrument or the member of the writing instrument.

Furthermore, it becomes impossible to easily remove the friction body from the writing instrument by adjusting slip-off force of the friction body for the writing instrument to be fitted to 5 N or more, thereby being able to prevent an infant or the like from accidentally swallowing it. When the friction body is attached to the above-mentioned writing instrument, locking ribs may also be provided on an inner face of a fitting portion of the friction body to the writing instrument, in order to improve slip-off force.

In addition, when the friction body is provided on the above-mentioned writing instrument, an aeration hole or aeration groove may be provided through the friction body, thereby achieving higher safety even when an infant or the like accidentally swallows it.

Then, the reversible thermochromic ink will be illustrated.

The reversible thermochromic ink for forming the reversible thermochromic image and handwriting which are allowed to change color by the friction body of the invention can be constituted by using various types such as a heat discoloring type in which color disappears from a color-developed state by heating, a color memory retention type in which a color-developed state or a discolored state is interchangeably memorized and retained in a specific temperature region and a heat color-developing type in which color is developed from a discolored state by heating and it returns to the discolored state by cooling from the color-developed state, alone or as a combination of thereof. The use of the above-mentioned constitution can form an image which is rich in magic properties, such as an image in which a color change caused by rubbing instantaneously returns to an original color or an image in which a color change caused by rubbing can be retained over a wide temperature range.

Further, in the above-mentioned reversible thermochromic ink, the retention of color exhibited in the normal state (daily living temperature region) can be effectively functioned, and it becomes possible to change color by rubbing with the friction body of the invention, by specifying the color change point on the low-temperature side to the range of -30°C to +10°C and the color change point on the high-temperature side to the range of 25°C to 95°C (preferably 36°C to 90°C) . This becomes therefore high in practicability.

Further, as a reversible thermochromic micro-encapsulated pigment contained in the above-mentioned reversible thermochromic ink, one is effective in which a reversible thermochromic composition containing at least three indispensable components of (a) an electron-donating colorexhibiting organic compound, (b) an electron-accepting compound and (c) a reactionmedium for determining the generation temperature of color reaction of both described above, which have hitherto been known, is micro-encapsulated. As the heat discoloring type in which color disappears from a color-developed state by heating, there can be utilized those described in JP-B-51-44706, JP-B-51-44707, JP-B-1-29398 and the like which have been proposed by the present applicant. The above-mentioned composition changes color in the vicinity of a predetermined temperature (color change point) taking it as the border, and shows a discolored state in a temperature region equal to or higher than a completely discoloring temperature and a color-developed state in a temperature region equal to or lower than a completely color developing temperature . Only a specified one state of the above-mentioned two states can be present in an ordinary temperature region. That is to say, the other state is maintained while heat or cold heat necessary for exhibiting the state is applied, but returns to a state exhibited in the ordinary temperature region when application of the heat or cold heat is cancelled. The hysteresis temperature range is relatively small (ΔH=1 to 7°C) .

In a system having a ΔH of 3°C or less (a system in which a fatty acid ester showing a ΔH value shown in JP-B-1-29398 (melting point - cloud point) of 3°C or less is used as a color change temperature-controlling compound), the composition is sensitively responsive to changes in temperature taking the completely discoloring temperature (t₄) and the completely color developing temperature (t₁) as the borders to show high sensitive color change properties. In a system having a ΔH of about 4 to 7°C, the composition gradually returns to an original situation after the color change, thereby being able to enhance the effect of visibility.

Further, color memory retention type thermochromic compositions described in JP-B-4-17154, JP-A-7-179777, JP-A-7-33997, JP-A-8-39936 and the like which have been proposed by the present assignee can also be applied which show large hysteresis characteristics (ΔH=8 to 50°C), that is to say, which change color via pathways which are greatly different in the case of increasing temperature from the lower temperature side than the color change region and the case of conversely decreasing temperature from the higher temperature side than the color change temperature region, in the shape of a curve obtained by plotting changes in coloring density against changes in temperature, and the color-developed state in a low temperature region equal to or lower than the completely color developing temperature (t₁) or the discolored state in a high temperature region equal to or higher than the completely discoloring temperature (t₄) can be memorized and retained in a specific temperature region (temperature region between t₂ and t₃ (substantially two-phase retaining temperature region)). Further, a color memory retention type thermochromic composition showing larger hysteresis characteristics (ΔH=50 to 80°C) can also be applied by using an ester compound constituted from an alcohol compound having two aromatic rings in its molecule and a saturated or unsaturated fatty acid having 4 or more carbon atoms, such as 4-benzyloxyphenylethyl caprate, as component (c).

The above-mentioned substantially two-phase retaining temperature region can be set depending on the purpose. In the invention, however, the above-mentioned color change point on the high-temperature side is set in the range of 25°C to 95°C (preferably 36°C to 90°C) .

In addition, the above-mentioned color change point on the low-temperature side (completely color developing temperature (t₁)) can be set to any temperature selected from the range of -30°C to +20°C (preferably -30°C to +10°C) .

The color-developed state or the discolored state are interchangeably memorized and retained at any temperature between the color development starting temperature (t₂) and the discoloration starting temperature (t₃) by the above-mentioned temperature setting, thereby being able to achieve visualization.

Further, as heat color-developing type compositions, there can be applied a system in which a specific alkoxyphenol compound having a straight-chain or branched alkyl group having 3 to 18 carbon atoms, which is color developed by heating from the discolored state and proposed by the present applicant, is applied as the electron-accepting compound (JP-A-11-129623 and JP-A-11-5973), a system in which a specific hydroxybenzoic acid ester is applied (JP-A-2001-105732), and further, a system in which a gallic acid ester or the like which is color developed at the color change point on the high-temperature side (completely color developing temperature) by heating from the discolored state is applied.

Here, a coloring agent such as a non-thermochromic dye or pigment is incorporated into the above-mentioned reversible thermochromic microcapsules or ink, thereby being able to give a constitution of exhibiting an interchangeable color change from colored (1) to colored (2).

The average value of the particle size of the above-mentioned micro-encapsulated pigment is preferably from 0.5 to 5.0 µm, and more preferably from 1 to 4 µm. In a system in which the average particle size exceeds 5.0 µm, the outflow properties from a capillary pore of a ballpoint pen tip or a marking pen tip decreases, separation from a paper surface occurs in pressing (rubbing) to cause dispersion of handwriting, or the capsules are broken by strong pressing force in some cases . On the other hand, in a system in which the average particle size is less than 0.5 µm, it becomes difficult to show high-density color developability.

The above-mentioned reversible thermochromic micro-encapsulated pigment can be incorporated in an amount of 2 to 50% by weight (preferably 3 to 40% by weight and more preferably 4 to 30% by weight) based on the total amount of the ink composition. Less than 2% by weight results in insufficient color developing density, whereas exceeding 50% by weight results in a decrease in ink outflow properties to cause inhibition of writing properties.

As for the shape of the capsule of the reversible thermochromic microencapsulated pigment of the invention, the application of the shape of circular cross section is not denied, but the shape of noncircular cross section is effective.

The reversible thermochromic handwriting formed by writing is densely oriented and firmly fixed so that the major axis side (maximum outer diameter side) of the above-mentioned micro-encapsulated pigment is closely attached to a face to be written. Accordingly, it shows high-density color developability, and against external force such as rubbing of the above-mentioned handwriting with the friction body, the above-mentioned micro-encapsulated pigment is delicately elastically deformed to a shape which relaxes the external force . Thus, the breakage of a wall membrane of the microcapsule is inhibited, and the thermochromic function can be effectively exhibited without impairing it.

In the above-mentioned micro-encapsulated pigment noncircularly shaped in cross section, the average value of the maximum outer diameter is preferably within the range of 0.5 to 5.0 µm.

In a system in which the average value of the maximum outer diameter of the above-mentioned micro-encapsulated pigment (including one circularly shaped in cross section) exceeds 5.0 µm, the outflow properties from the capillary pore decreases. On the other hand, in a system in which the average value of the maximum outer diameter is less than 0.5 µm, it is difficult to show high-density color developability. The average value of the maximum outer diameter preferably ranges from 1 to 4 µm, and the average particle size ((the maximum outer diameter + the minimum outer diameter at a central portion)/2) of the microcapsules suitably ranges from 1 to 3 µm.

To the microencapsulation of the above-mentioned reversible thermochromic composition, there can be applied a known means such as an interfacial polymerization process, an interfacial polycondensation process, an in situ polymerization process or a coacervate process. However, in order to obtain the micro-encapsulated pigment having a particle size within the range satisfying the above-mentioned requirements of the invention, the application of the interfacial polymerization process or the interfacial polycondensation process in which coagulation and coalescence are difficult to occur is effective.

Further, the coloring agent such as the non-thermochromic dye or pigment is incorporated into the above-mentioned reversible thermochromic microcapsule pigment or ink, thereby being able to give a constitution of exhibiting an interchangeable color change from colored (1) to colored (2) .

As the above-mentioned dyes, there can be used all of an acid dye, a basic dye, a direct dye and a fluorescent dye.

Further, as the pigments, there can be exemplified an inorganic pigment such as carbon black, ultramarine blue or a titanium dioxide pigment, an organic pigment such as an azo pigment, a phthalocyanine pigment, an indigo pigment, a thioindigo pigment, a threne pigment, a quinacridone pigment, an anthraquinone pigment, a throne pigment, a diketopyrrolopyrrol pigment, a dioxadine pigment, a perylene pigment, a perynone pigment or an isoindolinone pigment, and a fluorescent pigment.

As the reversible thermochromic ink contained in the writing instrument provided with the friction body of the invention or the writing instrument provided separately from the friction body as the writing instrument set, effective is one in which the reversible thermochromic micro-encapsulated pigment having a color change point on the high-temperature side ranging from 25°C to 95°C and an average particle size ranging from 0.5 to 5 µm is dispersed in an aqueous medium and a binder resin is incorporated as needed.

Specifically, a shear viscosity reducing ink containing a shear viscosity reducing substance or a coagulation ink in which the reversible thermochromic micro-encapsulated pigment is suspended with a water-soluble polymer coagulant in a loose coagulated state is effective. Further, a specific gravity controlled type ink in which the difference in specific gravity between the reversible thermochromic micro-encapsulated pigment and an aqueous vehicle is controlled to 0.05 or less can also be applied.

As the above-mentioned shear viscosity reducing substances, there can be exemplified a nonionic surfactant having an HLB value within the range of 8 to 12, xanthan gum, welan gum, succinoglucan (average molecular weight: 1,000,000 to 8,000,000) which is an organic acid-modified heteropolysaccharide whose constituent monosaccharide is glucose and galactose, guar gum, locust bean gum and a derivative thereof, hydroxyethyl cellulose, an alkyl arginate ester, a polymer mainly composed of an alkyl ester of methacrylic acid and having a molecular weight of from 100,000 to 150,000, glucomannan, a hydrocarbon extracted from seaweeds and having gelling capacity, such as agar or carrageenan, benzylidenesorbitol and benzylidenexylitol or a derivative thereof, a crosslinkable acrylic acid polymer and the like. They may be used alone or as a mixture thereof. Inparticular, xanthangum, succinoglucan and the crosslinkable acrylic acid polymer are excellent in storage stability.

As the above-mentioned water-soluble polymer coagulant, a nonionic water-soluble polymer compound is suitably used.

Specific examples thereof include polyvinyl pyrrolidone, polyethylene oxide, a water-soluble polysaccharide, a nonionic water-soluble cellulose derivative and the like. Of these, specific examples of the water-soluble polysaccharides include tragacanth gum, guar gum, pulullan and cyclodextrin. Further, specific examples of the nonionic water-soluble cellulose derivatives include methyl cellulose, hydroxyethyl cellulose, hydroxypropyl cellulose, hydroxyethylmethyl cellulose, hydroxypropylmethyl cellulose and the like. All can be applied as long as they are a water-soluble polymer showing a loose crosslinking function among micro-encapsulated pigment particles in the reversible thermochromic aqueous ink composition of the invention. However, the above-mentioned nonionic water-soluble cellulose derivative acts most effectively to the reversible thermochromic aqueous ink composition of the invention among others.

The above-mentionedpolymer coagulant canbe incorporated in an amount of 0.05 to 20% by weight based on the total amount of the ink composition.

Further, in order to inhibit drying of a pen tip, a glycol such as glycerin, propylene glycol, ethylene glycol, diethylene glycol or low-molecular weight polyethylene glycol, a lower alkyl ether thereof, 2-pyrrolidone, N-vinyl pyrrolidone or urea can be incorporated in an appropriate amount as a humectant.

The above-mentioned humectant can be incorporated in an amount of 5 to 40% by weight based on the total amount of the ink.

Further, in order to improve fixability and control viscosity, a binder resin can also added in an appropriate amount. The above-mentioned binder resin is selected from a resin emulsion, an alkali-soluble resin and a water-soluble resin.

The above-mentioned resin emulsions include aqueous dispersions of a polyacrylic acid ester, a styrene-acrylic acid copolymer, polyvinyl acetate, an ethylene-vinyl acetate copolymer, an ethylene-vinyl chloride copolymer, a methacrylic acid-maleic acid copolymer, ethylene-metacrylic acid copolymer, α-olefin-maleic acid copolymer, a polyester, a polyurethane and the like, and the above-mentioned alkali-soluble resins include a styrene-maleic acid copolymer, an ethylene-maleic acid copolymer, a styrene-acrylic acid copolymer and the like. The above-mentioned water-soluble resins include polyvinyl alcohol, polyvinyl butyral and the like. They can be used either alone or as a mixture of two or more thereof.

Further, various dispersing agents which have hitherto been used for general purpose, such as a surfactant, can be incorporated as needed.

When the ink composition of the invention is filled in a ballpoint pen to use, it is preferred to add a lubricant such as a higher fatty acid such as oleic acid, a nonionic surfactant having a long-chain alkyl group, polyether-modified silicone oil, a thiophosphite triester such as thiophosphite tri (alkoxycarbonylmethyl ester) or thiophosphite tri(alkoxycarbonylethyl ester), a phosphate monoester of a polyoxyethylene alkyl ether or a polyoxyethylene alkyl aryl ether, a phosphate diester of a polyoxyethylene alkyl ether or a polyoxyethylene alkyl aryl ether, or a metal salt, ammonium salt, amine salt or alkanolamine salt thereof, thereby imparting an effect of preventing wear of a ball receiving seat.

As the writing instrument for containing the above-mentioned reversible thermochromic ink, there is used a writing instrument having general-purpose shape, such as a marking pen, a ballpoint pen or a fountain pen in which various pen tips are each attached to a writing end portion.

Of the above-mentioned pen tips, as a marking pen tip, there can be applied, for example, a fiber tip, a felt tip, a plastic tip or a writing brush. As a ballpoint pen tip, there can be applied a tip in which a ball is held in a ball holding portion formed by deforming a metal pipe in the vicinity of its end inward from an outer surface under pressure, a tip in which a ball is held in a ball holding portion formed by cutting of a metal material by a drill or the like, a tip in which a ball receiving seat made of a resin is disposed inside a metal or plastic tip, or one in which a ball held in the above-mentioned tip is biased forward by a spring. A hard metal, stainless steel, ruby, a ceramic, a resin, a rubber or the like can be applied to the above-mentioned ball, and one having a diameter of 0.2 mm to 3.0 mm is suitably used.

Further, as a pen tip having fountain pen shape, there can be applied one obtained by cutting a metal plate such as a stainless steel plate or a gold alloy plate to a tapered form, followed by bending or curving, or one obtained by resin molding to a pen tip form. A slit can be provided at the center of the above-mentioned pen body, or a bead portion can also be provided at an end thereof.

When the ink is filled in the marking pen, the structure and shape of the marking pen itself are not particularly limited. Examples thereof include a structure of impregnating an ink absorber comprising a fiber bundle accommodated in a barrel with the ink and supplying the ink to a writing tip portion, a structure of directly containing the ink inside a barrel and allowing a comb groove-shaped ink flow control member or an ink flow control member comprising a fiber bundle to intervene and a structure of directly containing the ink inside a barrel and supplying a predetermined amount of a predetermined amount of the ink to the above-mentioned writing tip portion by a valve mechanism.

When the ink is filled in the ballpoint pen, the structure and shape of the ballpoint pen itself are not particularly limited. There are exemplified, for example, a structure of impregnating an ink absorber comprising a fiber bundle accommodated in a barrel with the ink and supplying the ink to a writing tip portion, a structure of directly containing the ink inside a barrel and allowing a comb groove-shaped ink flow control member or an ink flow control member comprising a fiber bundle to intervene, a structure of containing the ink and a liquid stopper for backflow prevention (ink backflow prevention body) in a barrel to which a tip having a ball attached and a structure of accommodating in a barrel a ballpoint pen refill in which the ink and a liquid stopper for backflow prevention are contained in an ink reservoir tube.

As the barrel or ink reservoir for containing the ink, there is used, for example, a formed article made of a thermoplastic resin such as polyethylene, polypropylene, polyethylene terephthalate or nylon.

The above-mentioned formed article may have transparency. The transparency includes colored transparence, semitransparence and colored semi-transparence, which make it possible to confirm the color of the ink and the remaining amount of the ink.

The above-mentioned barrel or ink reservoir having transparency may have transparency throughout, or may partially have a transparency portion through which the remaining amount of the ink can be visually confirmed.

A rear end of the ink contained in the above-mentioned ink reservoir or barrel can also be filled with the ink backflow prevention body (liquid stopper for backflow prevention).

A composition of the above-mentioned ink backflow prevention body comprises a nonvolatile liquid or a slightly volatile liquid.

Specific examples thereof include petrolatum, spindle oil, castor oil, olive oil, refined mineral oil, liquid paraffin, polybutene, α-olefin, oligomer or co-oligomer of α-olefin, dimethyl silicone oil, methyl phenyl silicone oil, amino-modified silicone oil, polyether-modified silicone oil, fatty acid-modified silicone oil and the like. They may be used either alone or as a combination of two or more thereof.

It is preferred to add a gelling agent to the above-mentioned non-volatile liquid and/or slightly volatile liquid to increase its viscosity to a suitable level. There can be exemplified clay-based thickeners such as silica whose surface is subjected to hydrophobilization treatment, fine particle silica whose surface is subjected to methylation treatment, aluminum silicate, expandable mica and bentonite or montmorillonite subjected to hydrophobilization treatment; fatty acid metal soaps such as magnesium stearate, calcium stearate, aluminum stearate and zinc stearate; tribenzylidene sorbitol; fatty acid amides; amide-modified polyethylene wax; hydrogenated castor oil; dextrin compounds such as a fatty acid dextrin; and cellulose compounds.

Further, a solid ink backflow prevention body can also be used in combination with the above-mentioned liquid ink backflow prevention body composition.

The shape of the above-mentioned writing instrument is not limited to the above, and a double head type writing instrument may be used in which pen bodies different in shape or pen bodies for delivering inks different in color tone are attached.

As the above-mentioned double head type writing instrument, there can be exemplified a writing instrument in which a partition wall is provided in a barrel, writing end portions are each firmly fixed to both end portions of the barrel directly or with the interposition of a junction member, and aqueous inks different in color tone are each contained in the above-mentioned barrel, or a writing instrument in which two refills are accommodated in a barrel so that writing end portions are positioned at both end portions of the barrel, and aqueous inks different in color tone are each contained in the above-mentioned two refills.

Further, the width of handwriting formed by the above-mentioned writing instrument preferably ranges from 0.1 to 5 mm. By adjusting it to the above-mentioned range, there can be formed handwriting suitable for a user to write a letter or draw an image on a minute portion and to allow it to change color using the friction body provided in combination.

In addition, when the width (T) of the handwriting formed by using the above-mentioned writing instrument is from 0.1 to 1.0 mm, the relation with the maximum width (C) of a contact portion at the time when the friction body is pressed on a glass plate with a load of 1000 g satisfies T<C≤20T, preferably T<C≤15T and more preferably T<C≤10T, whereby a desired portion of the handwriting can be allowed to change color surely and simply.

On the other hand, when the width (T) of the handwriting formed by using the above-mentioned writing instrument is relatively thick, specifically more than 1.0 mm to 5.0 mm, the relation with the maximum width (C) of a contact portion at the time when the friction body is pressed on a glass plate with a load of 1000 g satisfies T/5<C≤5T, preferably T/4<C≤4T and more preferably T/3<C≤3T, whereby a desired portion of the handwriting can be allowed to change color surely and simply.

By the way, when the friction body of the invention is used together with the writing instrument, a constitution of exhibiting an interchangeable color change from colored to colorless or from colorless to colored is employed rather than the constitution of exhibiting an interchangeable color change from colored (1) to colored (2), and rewriting is performed on handwriting in a colorless state, thereby being able to use as though newly written.

### [Examples]

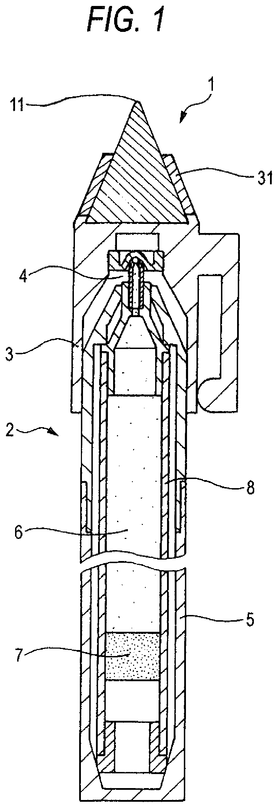

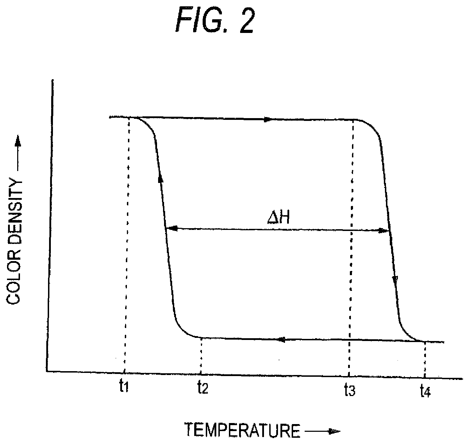

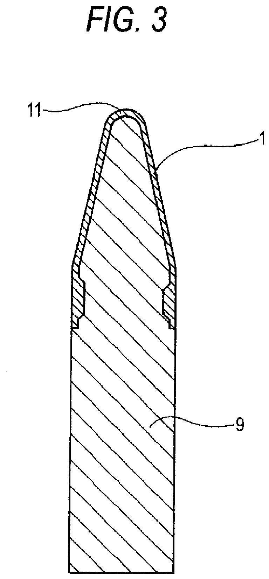

Examples will be shown below, but the invention should not be construed as being limited thereto. Parts used in the examples are by weight, and a 5 mm thick transparent float plate glass was used as a transparent glass plate. An embodiment of a writing instrument is shown in Figs. 1, 4 through 6 and 9 and a graph showing a color change behavior of a heat discoloring type thermochromic ink is shown in Figs. 2. Figs. 3, 7 and 8 show an embodiment of the friction body.

### Example 1

### Preparation of Friction Body

A blue pigment (0.25 part) was added to 100 parts of an SEBS copolymer elastomer (manufactured by Aron Kasei Co., Ltd., tradename: AR-885C, ShoreAhardness: 88), followed by kneading. Then, the resulting mixture was molded to a circular cone (a leading edge is formed in a convex curve) having a radius of 3 mm and a height of 10 mm, thereby obtaining a blue friction body 1.

The resulting friction body 1 was placed on an electronic balance so that the convex curve was directed upward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 1.4 mm², and the contact area at the time when pressed with a load of 1000 g was 3.0 mm² (that is to say, the contact area at the time when pressed with 1000 g was 2.14 times that at the time when pressed with 500 g).

The above-mentioned friction body 1 could allow a minute portion of a reversible thermochromic image printed on a paper surface to instantaneously change color by rubbing, and no color transfer to the above-mentioned paper surface occurred.

### Example 2

### Preparation of Friction Body

An aluminum powder (0.02 part) was added to 100 parts of an SEBS copolymer elastomer (manufactured by Aron Kasei Co., Ltd., trade name: AR-885C, Shore A hardness: 88), followed by kneading. Then, the resulting mixture was molded to a shape in which a quadrangular pyramid having a length of 5 mm, a width of 5 mm and a height of 6 mm was provided with a column having a radius of 3 mm and a height of 5 mm on a bottom surface thereof, thereby obtaining a silver colored friction body 1.

The resulting friction body 1 was placed on and fixed to an electronic balance so that a top portion of the quadrangular pyramid was directed upward, and a transparent glass plate was allowed to contact on the above-mentioned friction body 1 in a state parallel with a measuring dish of the electronic balance . Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 3.0 mm², and the contact area at the time when pressed with a load of 1000 g was 4.0 mm² (that is to say, the contact area at the time when pressed with 1000 g was 1.33 times that at the time when pressed with 500 g).

The above-mentioned friction body 1 could allow a minute portion of a reversible thermochromic image printed on a paper surface to instantaneously change color by rubbing, and no color transfer to the above-mentioned paper surface occurred.

### Example 3

### Preparation of Temperature-Sensitive Thermochromic Color Memorable Micro-encapsulated Pigment

A temperature-sensitive thermochromic color memorable composition comprising (a) compound of 2.0 parts of 3-(4-diethylamino-2-hexyloxyphenyl)-3-(1-ethyl-2-methylind ol-3-yl)-4-azaphthalide; (b) compound of 8.0 parts of bis(3-methyl-4-hydroxyphenyl) sulfide and 5.0 parts of 2,2-bis(4'-hydroxyphenyl) hexafluoropropane; and (c) compound of 50.0 parts of 4-benzyloxyphenylethyl caprate as component; was uniformly dissolved by heating, and
30.0 parts of an aromatic multivalent isocyanate prepolymer as a wall membrane material and 40.0 parts of an auxiliary solvent were mixed therewith.

The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of a temperature-sensitive thermochromic color memorable micro-encapsulated pigment.

The above-mentionedsuspension was centrifuged to isolate the temperature-sensitive thermochromic color memorable micro-encapsulated pigment.

The hysteresis range (ΔH) of the above-mentioned micro-encapsulated pigment (t₁: -14°C, t₂: -6°C, t₃: 48°C, t₄: 60°C, average particle size: 2 µm) is 64°C, and the color is changed from blue to colorless by a change in temperature.

### Preparation of Temperature-Sensitive Thermochromic Color Memorable Ink

There was prepared a temperature-sensitive thermochromic color memorable ink 6 comprising 25.7 parts of the above-mentioned micro-encapsulated pigment, 0.2 part of succinoglucan (shear viscosity reduction-imparting agent), 5.5 parts of urea, 7.5 parts of glycerol, 0.03 part of a nonionic permeability-imparting agent (manufactured by Sunnopco Co., Ltd., trade name: Nopco SW-WET-366), 0.15 part of a modified silicone-based antifoaming agent (manufactured by Nippon Silicone Co., Ltd., trade name: FS Antifoam 013B), 0.1 part of a preservative (manufactured by Zeneca, trade name: Proxel XL-2), 0.5 part of a lubricant (Plysurf A212C manufactured by Dai-ichi Kogyo Seiyaku Co., Ltd.), 0.5 part of triethanolamine and 59.82 parts of water.

### Preparation of Writing Instrument

A polypropylene pipe having an internal diameter of 4.4 mm was filled with 0.97 g of the above-mentioned ink 6 (previously cooled to -14°C or less to allow the micro-encapsulated pigment to develop a blue color, and then, allowed to stand under room temperature) by suction, and connected to a ballpoint pen tip 4 with the interposition of a holder made of a resin.

Then, the above-mentioned polypropylene pipe (refillpipe 8) was filled with an ink backflow prevention body (liquid stopper 7) mainly composed of polybutene and having viscoelasticity from a rear portion thereof, and further, a tail stopper was fitted into the rear portion of the refill pipe 8. A barrel 5 comprising a front shaft and a rear shaft was mounted, and a cap 3 was fitted thereto, followed by deaeration treatment by centrifugation to obtain a ballpoint pen 2 (handwriting width: 0.3 mm) .

The above-mentioned ballpoint pen tip 4 was formed by holding a hard metal ball having a diameter of 0.5 mm in a tip end formed by deforming a metal pipe in the vicinity of its end inward from an outer surface under pressure, and the friction body 1 obtained in Example 1 was fitted into a fitting portion 31 provided in a top portion thereof at a slip-off force of 5 N with a rubbing portion 11 formed in a convex curve (Fig. 1) .

### Color Change Behavior of Handwriting

Thermochromic handwriting obtained by writing "January 18, conference room" in a notebook by the resulting ballpoint pen 2 in characters having such a size that one character fell in a 3mm x 3mm square was in a blue color-developed state at room temperature (25°C), and this state was retained at a temperature of a color change point on the low-temperature side (-6°C) to a color change point on the high-temperature side (60°C).

Of the characters of the above-mentioned handwriting, only a part of "18" was rubbed several times by the friction body 1 firmly fixed to the cap. As a result, the part rubbed was immediately discolored to become colorless, and "20" was rewritten on the erased part by the ballpoint pen 2. In this case, the part rubbed could be erased without discoloring the other characters, and it was possible to form handwriting without the occurrence of repellency in the handwriting. The above-mentioned erasing by rubbing and handwriting formation on the erased part could be repeatedly performed. The above-mentioned state was retained at a temperature of -6°C to 60°C.

### Example 4

### Preparation of Reversible Thermochromic Ink

There was prepared a reversible thermochromic ink 6 comprising 18 parts of a reversible thermochromic pigment (t₁: 3°C, t₂: 6°C, t₃: 38°C, t₄: 45°C, average particle size: 2.5 µm, ΔH=37°C, the color is changed from blue to colorless) in which a temperature-sensitive color memorable composition was encapsulated in microcapsules, 0.33 part of xanthan gum (shear viscosity reduction-imparting agent), 10 parts of urea, 10 parts of glycerol, 0.6 part of a nonionic permeability-imparting agent (manufactured by Sunnopco Co., Ltd., trade name: Nopco SW-WET-366), 0.1 part of a modified silicone-based antifoaming agent (manufactured by Sunnopco Co., Ltd., trade name: Nopco 8034), 0.1 partof amildewproofingagent (manufacturedbyZeneca, trade name: Proxel XL-2) and 60.87 parts of water.

### Preparation of Writing Instrument

A polypropylene pipe having an internal diameter of 4.4 mm was filled with 0.97 g of the above-mentioned ink 6 (previously cooled to 2°C or less to allow the reversible thermochromic pigment to develop color, and then, allowed to stand under room temperature) by suction, and connected to a ballpoint pen tip 4 with the interposition of a holder made of a resin. The above-mentioned ballpoint pen tip 4 was formed by holding a hard metal ball having a diameter of 0.4 mm in a tip end formed by deforming a metal pipe in the vicinity of its end inward from an outer surface under pressure, and the above-mentioned ball was biased forward by a spring.

Then, the above-mentioned polypropylene pipe (refill pipe 8) was filled with an ink backflow prevention body (liquid stopper 7) mainly composed of polybutene and having viscoelasticity from a rear portion thereof, and incorporated into a barrel 5. A cap 3 in which the friction body 1 obtained in Example 2 was fitted into a fitting portion 31 at a slip-off force of 10 N with a rubbing portion 11 formed in a convex curve having a curvature radius of 3.0 mm was attached thereto, followed by deaeration treatment by centrifugation to obtain a shear viscosity reducing thermochromic ballpoint pen 2 (handwriting width: 0.2 mm) (Fig. 1).

Writing was performed on report paper by the above-mentioned ballpoint pen. As a result, discoloration of handwriting did not occur even by long-term writing or shorthand, and blue clear thermochromic handwriting stable in density was obtained.

### Color Change Behavior of Handwriting

Thermochromic handwriting obtained by writing "athletic meeting, the first park" in a notebook by the resulting ballpoint pen 2 in characters having such a size that one character fell in a 3mm x 3mm square was in a blue color-developed state at room temperature (25°C), and this state was retained at a temperature of a color change point on the low-temperature side (6°C) to a color change point on the high-temperature side (38°C) .

Of the characters of the above-mentioned handwriting, only a part of "the first" was rubbed several times by the friction body 1 firmly fixed to the cap. As a result, the part rubbed was immediately discolored to become colorless, and "seaside" was rewritten on the erased part by the ballpoint pen 2. In this case, the part rubbed could be erased without discoloring the other characters, and it was possible to form handwriting without the occurrence of repellency in the handwriting. The above-mentioned erasing by rubbing and handwriting formation on the erased part could be repeatedly performed. The above-mentioned state was retained at a temperature of 6°C to 38°C.

### Example 5

### Preparation of Friction Body

100 parts of a silicone material (manufactured by Dow Corning Silicone Toray Co., Ltd., trade name: DY32-7040U, Shore A hardness: 90) to which 0.2 part of a red pigment was added was kneaded, and molded to a column (a leading edge is formed in a convex curve) having a radius of 3 mm and a height of 10 mm, thereby obtaining a red friction body 1.

The resulting friction body 1 was placed on an electronic balance so that the convex curve was directed upward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 7.0 mm², and the contact area at the time when pressed with a load of 1000 g was 9.6 mm² (that is to say, the contact area at the time when pressed with 1000 g was 1.37 times that at the time when pressed with 500 g).

The above-mentioned friction body 1 could allow a minute portion of a reversible thermochromic image printed on a paper surface to instantaneously change color by rubbing, and no color transfer to the above-mentioned paper surface occurred.

### Example 6 (see Fig. 3)

### Preparation of Friction Device

A column having a circular cone portion having a radius of 3 mm and a height of 5 mm (a leading edge was formed in a convex curve, and a rear portion was formed in a column shape having a height of 10 mm as a supporting portion 9) which was made of a red pigment-containing polypropylene resin was primarily formed, and a conical coating portion made of a styrenic elastomer (manufactured by Mitsubishi Chemical Corporation, trade name: Rabalon, Shore A hardness: 75) was secondarily formed, by coinjection molding, thereby obtaining a friction device whose leading edge was formed as a light-red rubbing portion 11 (friction body 1).

The resulting friction body 1 was placed on and fixed to an electronic balance so that the convex curve was directed upward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 7.8 mm², and the contact area at the time when pressed with a load of 1000 g was 13.0 mm² (that is to say, the contact area at the time when pressed with 1000 g was 1.67 times that at the time when pressed with 500 g).

The above-mentioned friction body 1 could allow a minute portion of a reversible thermochromic image printed on a paper surface to instantaneously change color by rubbing.

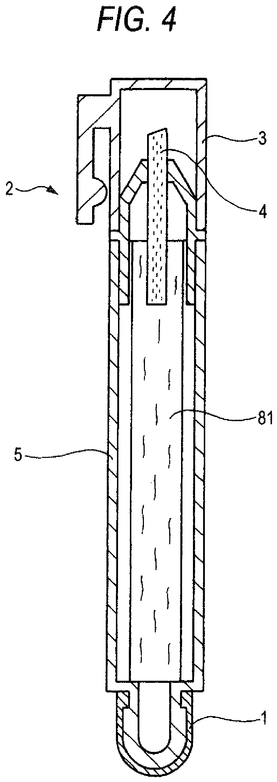

### Example 7 (see Fig. 4)

### Preparation of Friction Body

An orange pigment (0.25 part) was added to 100 parts of an SBS copolymer elastomer (manufactured by Aron Kasei Co., Ltd., trade name: AR-470, Shore A hardness: 70), followed by kneading. Then, a hollow column-shaped friction body (a shape in which a leading edge is formed in an R curved surface) having a radius of 3 mm and a height of 5 mm and a polypropylene barrel (having a projected portion at a rear end thereof) were formed by coinjection molding, thereby obtaining a barrel 5 provided with an orange friction body 1.

The resulting friction body 1 was placed on and fixed to an electronic balance so that the barrel 5 was disposed downward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 6.25 mm², and the contact area at the time when pressed with a load of 1000 g was 12.0 mm² (that is to say, the contact area at the time when pressed with 1000 g was 1.92 times that at the time when pressed with 500 g).

The above-mentioned friction body 1 could allow a minute portion of a reversible thermochromic image printed on a paper surface to instantaneously change color by rubbing, and no color transfer to the above-mentioned paper surface occurred.

### Preparation of Reversible Thermochromic Micro-encapsulated Pigment

A reversible thermochromic composition comprising (a) compound of 2.5 parts of 1, 3-dimethyl-6-diethylaminofluoran; (b) compound of 4.0 parts of 1, 1-bis (4'-hydroxyphenyl) n-decane and 4.0 parts of 2,2-bis (4'-hydroxyphenyl) hexafluoropropane; and (c) compound of 50.0 parts of 4-metylbenzyl palmitate; was uniformly dissolved by heating, and 35.0 parts of an aromatic multivalent isocyanate prepolymer as a wall membrane material and 50.0 parts of an auxiliary solvent were mixed therewith. The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of a reversible thermochromic micro-encapsulated pigment. Further, the above-mentioned suspension was centrifuged to isolate the reversible thermochromic micro-encapsulated pigment.

The hysteresis range (ΔH) of the above-mentioned micro-encapsulated pigment (t₁: -5°C, t₂: 2°C, t₃: 37°C, t₄: 43°C, average particle size: 2.5 µm) is 44°C, and the color is changed from orange to colorless by a change in temperature.

### Preparation of Aqueous Ink for Reversible Thermochromic Writing Instrument

The above-mentioned micro-encapsulated pigment (20.0 parts), 0.5 part of hydroxyethyl cellulose (manufactured by Union Carbide Japan Co., Ltd., trade name: Cellosize WP-09B), 18.0 parts of glycerol, 0.02 part of an antifoaming agent, 1.5 parts of a preservative, 59.88 parts of water and 0.1 part of a 10% diluted phosphoric acid solution were added, and uniformly stirred. The pH of ink was adjusted to 5.5 to obtain an ink for a reversible thermochromic writing instrument.

### Preparation of Writing Instrument

A fiber-bundled ink absorber 81 (porosity: 87%) in which polyester fibers were covered with a synthetic resin film was impregnated with 2.0 g of the above-mentioned ink (previously cooled to -5°C or less to allow the micro-encapsulated pigment to develop an orange color), and accommodated in a barrel 5 (provided with the friction body 1 at a rear end thereof) . A neck portion comprising a chisel type fiber pen tip 4 (porosity: about 53%, handwriting width: 3.5 mm) attached to a leading edge portion thereof was mounted to obtain a marking pen 2. The above-mentioned marking pen 2 is detachably provided with a cap 3.

### Color Change Behavior of Handwriting

Using the resulting marking pen 2, one straight line was drawn on a paper surface to form orange handwriting.

The above-mentioned straight line was partially rubbed several times at equal intervals by the friction body 1. As a result, the parts rubbed was immediately discolored to become colorless, resulting in the formation of a broken line. Further, when rewriting was performed on the erasedparts, it was possible to form handwriting without the occurrence of repellency in the handwriting. The above-mentioned erasing by rubbing and handwriting formation on the erased parts could be repeatedly performed. The above-mentioned state was retained at a temperature of 2°C to 43°C.

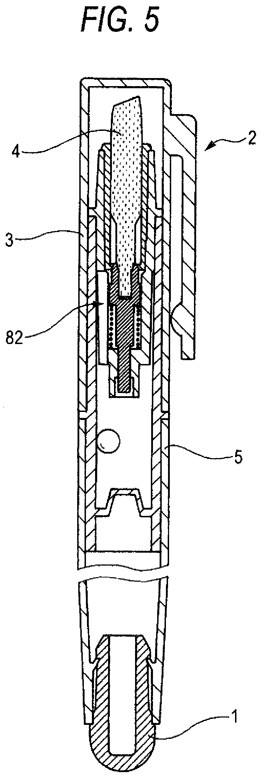

### Example 8 (see Fig. 5)

### Preparation of Friction Body

An aluminum powder (0.02 part) was added to 100 parts of an SEBS copolymer elastomer (manufactured by Aron Kasei Co., Ltd., trade name: AR-885C, Shore A hardness: 88), followed by kneading. Then, the resulting mixture was molded to a shape in which a leading edge of a column having a radius of 3 mm and a height of 5 mm was formed in a convex curve (further provided with a flange portion in the rear), thereby obtaining a silver colored friction body 1.

The resulting friction body 1 was placed on and fixed to an electronic balance so that the convex curve was directed upward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 3.2 mm², and the contact area at the time when pressed with a load of 1000 g was 4.9 mm² (that is to say, the contact area at the time when pressed with 1000 g was 1.53 times that at the time when pressed with 500 g).

The above-mentioned friction body 1 could allow a minute portion of a reversible thermochromic image printed on a paper surface to instantaneously change color by rubbing, and no color transfer to the above-mentioned paper surface occurred.

### Preparation of Reversible Thermochromic Micro-encapsulated Pigment

A reversible thermochromic composition comprising 1.5 parts of (a) compound of 2-(dibutylamino)-8-(dipentylamino)-4-methyl-spiro[5H-[1]be nzopyrano[2,3-g]pyrimidine-5,1'(3'H)-iso-benzofuran]-3-one ; (b) compound of 3.0 parts of 4,4'-(2-methylpropylidene)bisphenol and 5.0 parts of 2,2-bis(4'-hydroxyphenyl)-hexafluoropropane; and (c) compound of 50.0 parts of 4-benzyloxyphenylethyl caprate; was uniformly dissolved by heating, and 25.0 parts of an aromatic multivalent isocyanate prepolymer as a wall membrane material and 50.0 parts of an auxiliary solvent were mixed therewith. The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of a reversible thermochromic micro-encapsulated pigment.

The above-mentioned suspension was centrifuged to isolate the reversible thermochromic micro-encapsulated pigment.

The hysteresis range (ΔH) of the above-mentioned micro-encapsulated pigment (t₁: -20°C, t₂: -8°C, t₃: 49°C, t₄: 60°C, average particle size: 2.5 µm) is 61°C, and the color is changed from pink to colorless by a change in temperature.

### Preparation of Microcapsule Particles

A composition comprising 3.0 parts of 1,1-bis(4'-hydroxyphenyl)-decane, 3.0 parts of 2,2-bis(4'-hydroxyphenyl)-hexafluoropropane and 50.0 parts of butyl palmitate was uniformly dissolved by heating, and 25.0 parts of an aromatic multivalent isocyanate prepolymer as a wall membrane material and 50.0 parts of an auxiliary solvent were mixed therewith. The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of microcapsule particles.

The above-mentioned suspension was centrifuged to isolate the microcapsule particles.

The average particle size of the above-mentioned microcapsule particles was 2.5 µm.

### Preparation of Reversible Thermochromic Aqueous Ink Composition

The above-mentioned reversible thermochromic micro-encapsulated pigment (14.0 parts), 6.0 parts of the microcapsule particles, 0.5 part of hydroxyethyl cellulose (manufactured by Union Carbide Japan Co., Ltd., trade name: Cellosize WP-09L), 15.0 parts of glycerol, 0.02 part of an antifoaming agent, 1.0 parts of a preservative, 63.38 parts of water and 0.1 part of a 10% diluted phosphoric acid solution were added, and uniformly stirred. The pH of ink was adjusted to about 5.6 to obtain a reversible thermochromic aqueous ink.

### Preparation of Direct Ink Type Writing Instrument

The above-mentioned ink (previously cooled to -20°C or less to allow the micro-encapsulated pigment to develop a pink color, and then, allowed to stand under room temperature) and a stirrer were allowed to be contained in a barrel, and a marking pen body (a chisel type fiber pen tip 4 (porosity: about 53%, handwriting width: 3.5 mm)) was attached to a leading edge portion thereof with the interposition of a valve mechanism 82 to obtain a direct ink type writing instrument 2 of marking pen form.

The above-mentioned valve mechanism 82 comprises a valve seat, a valve element and a metal spring for biasing the above-mentioned valve element so as to be pressed to the valve seat, and has a structure that the valve opens by writing pressure to the pen body 4 in writing.

The above-mentioned direct ink type writing instrument 2 is detachably provided with a cap 3, and the friction body 1 previously prepared is provided in a rear end of the barrel by press fitting.

### Color Change Behavior of Handwriting

Using the resulting marking pen 2, a straight line was drawn on characters printed on a paper surface to form a pink highlight (handwriting).

One character part of the above-mentioned straight line was rubbed several times by the friction body 1. As a result, the part rubbed was immediately discolored to become colorless . Further, when rewriting was performed on the erased part, it was possible to form handwriting without the occurrence of repellency in the handwriting. The above-mentioned erasing by rubbing and handwriting formation on the erased part could be repeatedly performed. The above-mentioned state was retained at a temperature of -8°C to 60°C.

### Example 9 (see Fig. 5)

### Preparation of Reversible Thermochromic Micro-encapsulated Pigment

A reversible thermochromic composition comprising (a) compound of 4.5 parts of 2-(2-chloroamino)-6-dibutylaminofluoran; 3.0 parts of 4,4'-(2-methylpropylidene)bisphenol and 5.0 parts of 2,2-bis(4'-hydroxyphenyl)hexafluoropropane; and (c) compound of 50.0 parts of 4-benzyloxyphenylethyl caprate was uniformly dissolved by heating, and 25.0 parts of an aromatic multivalent isocyanate prepolymer as a wall membrane material and 50.0 parts of an auxiliary solvent were mixed therewith. The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of a reversible thermochromic micro-encapsulated pigment.

The above-mentioned suspension was centrifuged to isolate the reversible thermochromic micro-encapsulated pigment.

The average particle size of the above-mentioned micro-encapsulated pigment is 2.5 µm, the completely discoloring temperature thereof is 60°C, the completely color developing temperature thereof is -20°C, and the color is changed from black to colorless by a change in temperature.

### Preparation of Microcapsule Particles

A composition comprising 3.0 parts of 2,2-bis(4'-hydroxyphenyl)-hexafluoropropane, 3.0 parts of 1,1-bis(4'-hydroxyphenyl)-decane and 50.0 parts of cetyl caprate was uniformly dissolved by heating, and 25.0 parts of an aromatic multivalent isocyanate prepolymer as a wall membrane material and 50.0 parts of an auxiliary solvent were mixed therewith. The resulting solution was emulsion-dispersed in an 8% polyvinyl alcohol aqueous solution so as to form micro droplets, and stirring was continued at 70°C for about 1 hour. Then, 2.5 parts of a water-soluble aliphatic modified amine was added, and stirring was further continued for 6 hours to obtain a suspension of microcapsule particles.

The above-mentioned suspension was centrifuged to isolate the microcapsule particles.

The average particle size of the above-mentioned microcapsule particles was 2.5 µm.

### Preparation of Reversible Thermochromic Ink Composition

16.0 parts of above-mentioned reversible thermochromic micro-encapsulated pigment, 9.0 parts of the microcapsule particles, 0.5 part of hydroxyethyl cellulose (manufactured by Union Carbide Japan Co., Ltd., trade name: Cellosize WP-09L), 15.0 parts of glycerol, 0.02 part of an antifoaming agent, 1.0 parts of a preservative, 58.38 parts of water and 0.1 part of a 10% diluted phosphoric acid solution were added, and uniformly stirred. The pH of ink was adjusted to about 5.5 to obtain a reversible thermochromic aqueous ink.

### Preparation of Direct Ink Type Writing Instrument

The above-mentioned ink (previously cooled to -20°C or less to allow the micro-encapsulated pigment to develop a black color, and then, allowed to stand under room temperature) and a stirrer were allowed to be contained in a barrel, and a marking pen body (a bombshell type fiber pen tip 4 (porosity: about 53%, handwriting width: 1.0 mm)) was attached to a leading edge portion thereof with the interposition of a valve mechanism 82 to obtain a direct ink type writing instrument 2 of marking pen form.

The above-mentioned valve mechanism 82 comprises a valve seat, a valve element and a metal spring for biasing the above-mentioned valve element so as to be pressed to the valve seat, and has a structure that the valve opens by writing pressure to the pen body 4 in writing.

The above-mentioned direct ink type writing instrument 2 is detachably provided with a cap 3, and the friction body 1 prepared in Example 8 is provided in a rear end of the barrel.

### Color Change Behavior of Handwriting

Thermochromic handwriting obtained by writing "January 18, conference room" in a notebook by the resulting marking pen 2 in characters having such a size that one character fell in a 10mm x 10mm square was in a black color-developed state at room temperature (25°C), and this state was retained at a temperature of a color change point on the low-temperature side (-20°C) to a color change point on the high-temperature side (60°C).

Of the characters of the above-mentioned handwriting, only a part of "18" was rubbed several times by the friction body 1 attached to the rear end of the barrel. As a result, the part rubbed was immediately discolored to become colorless, and "20" was rewritten on the erased part by the marking pen 2. In this case, the part rubbed could be erased without discoloring the other characters, and it was possible to form handwriting without the occurrence of repellency in the handwriting. The above-mentioned erasing by rubbing and handwriting formation on the erased part could be repeatedly performed. The above-mentioned state was retained at a temperature of -7°C to 60°C.

### Example 10

### Preparation of Friction Body

A barrel (having a projected portion at a rear end thereof) made of a blue pigment-containing polypropylene resin was primarily formed, and a coating portion (coating the projected portion at the rear end of the barrel and having a shape in which a leading edge of a column having a radius of 3 mm was formed in a convex curve) made of a blue pigment-containing styrenic elastomer (manufactured by Mitsubishi Chemical Corporation, trade name: Rabalon, Shore A hardness: 85) was secondarily formed, by coinjection molding, thereby obtaining a barrel provided with a friction body 1 whose leading edge was formed in a convex curve.

The resulting barrel was placed on and fixed to an electronic balance so that the convex curve of the friction body was directed upward, and a transparent glass plate was allowed to contact on the above-mentioned friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 4.5 mm², and the contact area at the time when pressed with a load of 1000 g was 7.3 mm² (that is to say, the contact area at the time when pressed with 1000 g was 1.62 times that at the time when pressed with 500 g).

The above-mentioned friction body 1 could allow a minute portion of a reversible thermochromic image printed on a paper surface to instantaneously change color by rubbing.

### Preparation of Writing Instrument

A polypropylene pipe having an internal diameter of 4.4 mm was filled with 0.1 g of the ink 6 prepared in Example 3 (previously cooled to -14°C or less to allow the micro-encapsulated pigment to develop a blue color, and then, allowed to stand under room temperature) by suction, and connected to a ballpoint pen tip 4 with the interposition of a holder made of a resin.

Then, the above-mentioned polypropylene pipe was filled with an ink backflow prevention body (liquid stopper 7) mainly composed of polybutene and having viscoelasticity from a rear portion thereof, and further, a tail stopper was fitted into the rear portion of the refill pipe to obtain a ballpoint pen refill. The barrel previously obtained and a neck portion were mounted, and a cap was fitted thereto, followed by deaeration treatment by centrifugation to obtain a ballpoint pen (handwriting width: 0.4 mm).

The above-mentioned ballpoint pen tip 4 was formed by holding a stainless steel ball having a diameter of 0.7 mm in a tip end formed by deforming a metal pipe in the vicinity of its end inward from an outer surface under pressure.

### Color Change Behavior of Handwriting

Thermochromic handwriting obtained by writing "3 p.m., conference room" in a notebook by the resulting ballpoint pen in characters having such a size that one character fell in a 4mm x 4mm square was in a blue color-developed state at room temperature (25°C), and this state was retained at a temperature of a color change point on the low-temperature side (-6°C) to a color change point on the high-temperature side (60°C).

Of the characters of the above-mentioned handwriting, only a part of "3 p.m." was rubbed several times by the friction body attached to the rear end of the barrel. As a result, the part rubbed was immediately discolored to become colorless, and "9 a.m." was rewritten on the erased part by the ballpoint pen. In this case, the part rubbed could be erased without discoloring the other characters, and it was possible to form handwriting without the occurrence of repellency in the handwriting. The above-mentioned erasing by rubbing and handwriting formation on the erased part could be repeatedly performed. The above-mentioned state was retained at a temperature of -6°C to 60°C.

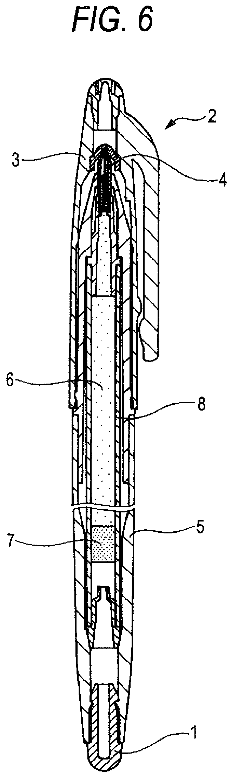

### Example 11 (see Fig. 6)

### Preparation of Reversible Thermochromic Ink

There was prepared a reversible thermochromic ink comprising 12.5 parts of amicro-encapsulatedpigment (t₁: -18°C, t₂: -9°C, t₃: 42°C, t₄: 63°C, average particle size: 2.5µm, ΔH=66°C, the color is changed from green to colorless) in which a reversible thermochromic color memorable composition comprising (a) compound of 1.0 part of 4,5,6,7-tetrachloro-3-[4-(diethylamino)-2-ethoxyphenyl]-3-[4-(diethylamino)-2-methylphenyl]-1(3H)isobenzofuranone and 4.0 parts of 2-(N-methylanilino)-6-(N-ethyl-N-p-tolylamino)fluoran; (b) compound of 6.0 parts of 2,2-bis(4'-hydroxyphenyl)hexafluoropropane and 4.0 parts of 1,1-bis(4'-hydroxyphenyl)n-decane; and (c) compound of 50.0 parts of 4-benzyloxyphenylethyl caprate; was encapsulated, 0.33 part of xanthan gum (shear viscosity reduction-imparting agent), 10 parts of urea, 10 parts of glycerol, 0.6 part of a nonionic permeability-imparting agent, 0.1 part of a modified silicone-based antifoaming agent, 0.1 part of a mildewproofing agent and 66.37 parts of water.

### Preparation of Writing Instrument

A polypropylene pipe 8 having an internal diameter of 4.4 mm was filled with the above-mentioned ink 6 (previously cooled to -18°C or less to allow the micro-encapsulated pigment to develop a green color, and then, allowed to stand under room temperature) by suction, and connected to a ballpoint pen tip 4 with the interposition of a holder made of a resin.

Then, the above-mentioned polypropylene pipe was filled with an ink backflow prevention body (liquid stopper 7) mainly composed of polybutene and having viscoelasticity from a rear portion thereof, and further, a tail stopper was fitted into the rear portion of the pipe. A front barrel and a rear barrel were assembled and accommodated in a barrel 5, and a cap 3 was fitted thereto, followed by deaeration treatment by centrifugation to obtain a ballpoint pen 2.

The above-mentioned ballpoint pen tip 4 was formed by holding a hard metal ball having a diameter of 0.7 mm (handwriting width: 0.35 mm) in a tip end formed by deforming a metal pipe in the vicinity of its end inward from an outer surface under pressure, and the above-mentioned ball was biased forward by a spring.

Further, the friction body 1 prepared in Example 8 is provided in a rear portion of the rear barrel by press fitting.

### Color Change Behavior of Handwriting

Thermochromic handwriting obtained by writing "ABCDE" in a notebook by the resulting ballpoint pen 2 in characters having such a size that one character fell in a 5mm x 5mm square was in a green color-developed state at room temperature (25°C), and this state was retained at a temperature of a color change point on the low-temperature side (-18°C) to a color change point on the high-temperature side (63°C).

Of the characters of the above-mentioned handwriting, only a part of "DE" was rubbed several times by the friction body 1 attached to the rear end of the barrel 5. As a result, the part rubbed was immediately discolored to become colorless, and "BA" was rewritten on the erased part by the ballpoint pen 2. In this case, the part rubbed could be erased without discoloring the other characters, and it was possible to form handwriting without the occurrence of repellency in the handwriting. The above-mentioned erasing by rubbing and handwriting formation on the erased part could be repeatedly performed. The above-mentioned state was retained at a temperature of -9°C to 42°C.

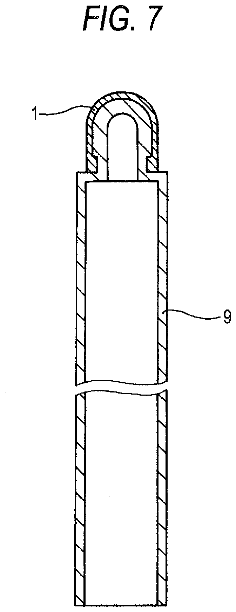

### Example 12 (see Fig. 7)

### Preparation of Friction Device

A hollow column-shaped friction body 1 (a shape in which a leading edge is formed in an R curve) having a radius of 3 mm and a height of 5 mm, which was made of an SEBS copolymer elastomer (manufactured by Aron Kasei Co., Ltd., trade name: AR-800C, Shore A hardness: 65), and a column-shaped polypropylene supporting portion 9 (having a projected portion at an end thereof) containing a black pigment were formed by coinjection molding, thereby obtaining a friction device provided with the friction body 1.

The resulting friction device was placed on and fixed to an electronic balance so that the leading edge curve was directed upward, and a transparent glass plate was allowed to contact on the friction body 1 in a state parallel with a measuring dish of the electronic balance. Then, the contact areas of the above-mentioned friction body 1 and the transparent glass plate visually confirmed by perpendicularly pressing the above-mentioned glass plate with loads of 500 g and 1000 g were measured. As a result, the contact area at the time when pressed with a load of 500 g was 5.2 mm², and the contact area at the time when pressed with a load of 1000 g was 11.5 mm² (that is to say, the contact area at the time when pressed with 1000 g was 2.2 times that at the time when pressed with 500 g).

The above-mentioned friction body 1 could allow a minute portion of a reversible thermochromic image printed on a paper surface to instantaneously change color by rubbing.

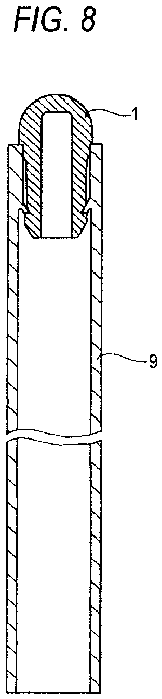

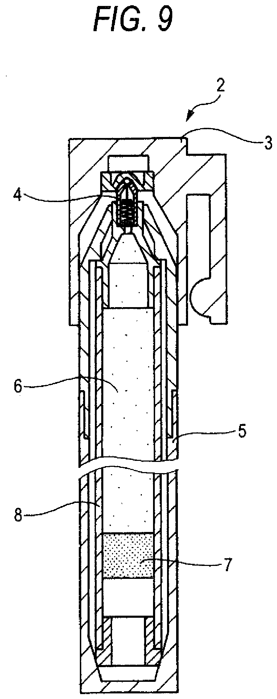

### Example 13 (see Figs. 8 and 9)

### Preparation of Friction Device

The friction body 1 obtained in Example 8 was inserted by press fitting into an end portion of a cylindrical supporting portion 9 made of a polycarbonate resin, thereby obtaining a friction device. In addition, it is also possible to obtain a double head type friction device by further attaching the friction body 1 to the other end portion.

### Preparation of Writing Instrument Set

The ballpoint refills obtained in Examples 4, 10 and 11 were subjected to deaeration treatment by centrifugation. Then, they were each accommodated in a barrel 5 comprising a front barrel and a rear barrel, and a cap 3 was fitted, thereby obtaining three ballpoint pens 2.

Further, together with the marking pens obtained in Examples 8 and 9, the friction device prepared above and the friction devices (friction body 1) obtained in Examples 5, 6 and 12 were combined to obtain a writing instrument set (comprising five writing instruments and four kinds of friction bodies).

According to the above-mentioned writing instrument set, handwriting of a plurality of colors and a plurality of widths could be formed depending on the writing instrument, and rubbing could be performed by selecting the desired friction device (friction body 1).

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

### THE FOLLOWING NUMBERED PARAGRAPHS DESCRIBE FURTHER EMBODIMENTS OF THE INVENTION

1. A friction body for allowing an image having reversible thermochromism to change color from a first state to a second state by frictional heat,
   wherein the frictional body has a contact area ranging from 0.5 to 15 mm² when pressed onto a glass plate with a load of 1000 g.
2. The friction body according to 1, wherein the friction body has a contact area ranging from 0.5 to 12 mm² when pressed onto a glass plate with a load of 500 g.
3. The friction body according to 2, wherein the friction body is an elastic body which satisfies a relation of B<A≤4B,
   wherein A is a contact area at the time when pressed onto the glass plate with the load of 1000 g and
   B is a contact area at the time when pressed onto the glass plate with the load of 500 g.
4. A friction body for allowing an image having reversible thermochromism to change color from a first state to a second state by frictional heat,
   wherein the frictional body has a contact area of 3.2 mm² or less when pressed onto a glass plate with a load of 500 g, and a contact area of 5.0 mm² or less when pressed onto a glass plate with a load of 1000 g.
5. The friction body according to any one of 1 to 4, wherein the friction body has a Shore hardness based on JIS K6253A of 40 degrees or more.
6. The friction body according to 1, wherein the friction body comprises a styrene-butadiene-styrene copolymer or a styrene-ethylene·butylene-styrene copolymer.
7. The friction body according to 1, wherein the friction body comprises a coloring agent
8. A writing instrument comprising:
   a reversible thermo-chromic ink therein; and
   the friction body according to 1 for allowing handwriting formed by the writing instrument to change color from the first state to the second state by frictional heat.
9. The writing instrument according to 8, wherein a writing instrument member constituting the writing instrument or a main body of the writing instrument and the friction body are integrally formed by coinjection molding.
10. The writing instrument according to 8, wherein the reversible thermochromic ink is of any one or of an arbitrary combination of:
   a heat discoloring type in which color disappears from a color-developed state by heating;
   a color memory retention type in which a color-developed state or a discolored state is interchangeably memorized and retained in a specific temperature region; and
   a heat color-developing type in which color is developed from a discolored state by heating and it returns to the discolored state by cooling from the color-developed state.
11. The writing instrument according to 8, wherein the writing instrument has a handwriting width ranging from 0.1 to 5 mm.
12. The writing instrument according to 8, wherein the reversible thermochromic ink comprises at least a micro-encapsulated pigment having a color change point on the high-temperature side ranging from 25°C to 95°C.
13. A writing instrument set comprising:
   a writing instrument containing at least reversible thermochromic ink; and
   the friction body according to 1 for allowing handwriting formed by the writing instrument to change color from the first state to the second state by frictional heat.
14. The writing instrument set according to 13, wherein the writing instrument has a handwriting width ranging from 0.1 to 5 mm.

## Claims

1. A friction body for allowing an image having reversible thermochromism to change color from a first state to a second state by frictional heat,
wherein the friction body has a Shore hardness A in accordance with JIS (Japanese Industrial Standard) K6253A of 55 degrees or more, is configured to be used without pollution to the periphery of a rubbed portion caused by shavings and has a contact area ranging from 0.5 to 15 mm² when pressed onto a glass plate with a load of 1000 g.

2. The friction body according to claim 1, wherein the friction body has a contact area ranging from 0.5 to 12 mm² when pressed onto a glass plate with a load of 500 g.

3. The friction body according to claim 2, wherein the friction body is an elastic body which satisfies a relation of B<A≤4B,
wherein A is a contact area at the time when pressed onto the glass plate with the load of 1000 g and
B is a contact area at the time when pressed onto the 20 glass plate with the load of 500 g.

4. The friction body according to one of the preceding claims,
wherein the friction body has a contact area of 3.2 mm² or less when pressed onto a glass plate with a load of 500 g, and a contact area of 5.0 mm² or less when pressed onto a glass plate with a load of 1000 g.

5. The friction body according to any one of claims 1 to 4, wherein the friction body has a Shore hardness based on JIS K6253A of 40 degrees or more.

6. The friction body according to claim 1, wherein the friction body comprises a styrene-butadiene-styrene copolymer or a styrene-ethylene-butylene-styrene copolymer.

7. The friction body according to claim 1, wherein the friction body comprises a coloring agent.

8. A writing instrument comprising:
a reversible thermo-chromic ink therein; and the friction body according to claim 1 for allowing handwriting formed by the writing instrument to change color from the first state to the second state by frictional heat.

9. The writing instrument according to claim 7, wherein a writing instrument member constituting the writing instrument or a main body of the writing instrument and the friction body are integrally formed by coinjection molding.

10. The writing instrument according to claim 7, wherein the reversible thermochromic ink is of any one or of an arbitrarycombination of:
a heat discoloring type in which color disappears from a color-developed state by heating;
a color memory retention type in which a color-developed state or a discolored state is interchangeably memorized and retained in a specific temperature region; and
a heat color-developing type in which color is developed from a discolored state by heating and it returns to the discolored state by cooling from the color-developed state.

11. The writing instrument according to claim 7, wherein the writing instrument has a handwriting width ranging from 0.1 to 5 mm.

12. The writing instrument according to claim 7, wherein the reversible thermochromic ink comprises at least a micro-encapsulated pigment having a color change point on the high-temperature side ranging from 25°C to 95°C.

13. A writing instrument set comprising:
a writing instrument containing at least reversible thermochromic ink; and
the friction body according to claim 1 for allowing handwriting formed by the writing instrument to change color from the first state to the second state by frictional heat.

14. The writing instrument set according to claim 12, wherein the writing instrument has a handwriting width ranging from 0.1 to 5 mm.
